# EUROPEAN PATENT SPECIFICATION

(11) **EP 4 478 687 B1**
(45) Date of publication and mention of the grant of the patent: **28.10.2026**
(21) Application number: 23765750.7
(22) Date of filing: 16.02.2023
(51) Int. Cl.: H04L 67/12, B60L 53/66, B60L 53/68, B60L 53/65, B60L 58/10, B60L 58/16, H04W 4/44, G07C 5/00, H04L 9/40

(54) **BATTERY DATA MANAGEMENT METHOD AND SYSTEM FOR VEHICLE, AND CLOUD SERVER AND VEHICLE COMMUNICATION APPARATUS**
BATTERIEDATENVERWALTUNGSVERFAHREN UND -SYSTEM FÜR FAHRZEUG SOWIE CLOUD-SERVER UND FAHRZEUGKOMMUNIKATIONSVORRICHTUNG
PROCÉDÉ ET SYSTÈME DE GESTION DE DONNÉES DE BATTERIE POUR UN VÉHICULE, ET SERVEUR EN NUAGE ET APPAREIL DE COMMUNICATION DE VÉHICULE

(30) Priority: 10.03.2022 CN 202210237895
(43) Date of publication of application: 18.12.2024
(73) Proprietor: Autel Digital Power Co., Ltd., Shenzhen, Guangdong 518000 (CN)
(72) Inventor: SHEN, Xiaojie, Shenzhen, Guangdong 518000 (CN); TANG, Xinguang, Shenzhen, Guangdong 518000 (CN); JIANG, Chu, Shenzhen, Guangdong 518000 (CN)
(74) Representative: Harris, Oliver John Richard
(86) International application number: PCT/CN2023/076466
(87) International publication number: WO 2023/169172

(56) References cited:
- CN-A- 109 164 783
- CN-A- 110 289 958
- CN-A- 112 818 602
- CN-A- 113 536 056
- CN-A- 115 009 097
- US-A1- 2018 300 968
- US-A1- 2018 300 968
- US-A1- 2019 199 800

## Description

### CROSS-REFERENCE TO RELATED APPLICATIONS

This application claims priority to Chinese Patent Application No. 2022102378955, entitled "Vehicle Data Management Method, Server and Vehicle Communication Device", filed on March 10, 2022, by China Patent Office.

### TECHNICAL FIELD

The present application relates to the field of new energy vehicles, and in particular to a battery data management method for a vehicle and a system thereof, a cloud server and a vehicle communication device.

### BACKGROUND

New energy vehicles refer to vehicles that employ unconventional vehicle fuels as a power source (e.g., power batteries). For new energy vehicles using power battery as power source, power battery is the core component on the vehicle, and the safety of power battery is related to driving safety. Therefore, how to accurately evaluate the health status of power battery and ensure driving safety is an urgent concern for the vehicle owners.

As an electrochemical form of energy storage carrier, the internal chemical reaction of power battery is carried out at anytime and anywhere and it is difficult to directly monitor. Although a battery management system (BMS) on an automobile can monitor the health status of a power battery in real time and make protective measures when the power battery fails, the accuracy of the battery management system in evaluating the health status of the power battery is not high enough to ensure driving safety.

US2018300968A1 relates to a fleet management system for vehicles and batteries at a geographical location. CN110289958A relates to an internet of vehicles identity authentication method and system. The system is composed of an application server, a vehicle identity authentication server, vehicle identity authentication equipment and an intelligent terminal with an Internet of Vehicles application client. The vehicle identity authentication equipment only performs safety communication with the identity authentication server, and the identity authentication server serves as a bridge for communication between the vehicle identity authentication equipment and the application server and the Internet of Vehicles application client. CN109164783A relates to a vehicle diagnosis method, a vehicle diagnosis device, vehicle diagnosis equipment, and a medium. If a diagnostic event for a target vehicle is detected, transmitting a query request to the target vehicle, wherein the query request is used for requesting the target vehicle to transmit a vehicle identification code of the target vehicle; receiving the vehicle identification code sent by the target vehicle, and determining a vehicle model of the target vehicle according to the vehicle identification code; acquiring a target diagnosis file and an initial system list of the target vehicle according to the vehicle model; and diagnosing the target vehicle based on the target diagnosis file and the initial system list.

### SUMMARY

Embodiments of the present application provide a battery data management method for a vehicle and a system thereof, a cloud server and a vehicle communication device, which can improve the accuracy of a power battery health status evaluation. Hereafter "embodiment(s)" refer to embodiment(s) of the disclosure. The invention is defined in the appended claims.

In order to solve the above technical problem, the embodiments of the present application provide the following technical solutions:

In a first aspect, an embodiment of the present application provides a battery data management method for a vehicle, applied to a battery data management system, wherein the battery data management system comprises a vehicle communication device and a cloud server, the vehicle communication device is used to be communicatively connected with the vehicle and the cloud server, respectively, and the cloud server is also used to be communicatively connected with the user terminal, the method comprising:
transmitting, by the vehicle communication device, a unique identifier acquisition request to the cloud server, wherein the unique identifier is used for binding battery data acquired by the vehicle communication device from the vehicle;
after receiving the unique identifier acquisition request, acquiring, by the cloud server, target vehicle type information from the user terminal, and determining whether the vehicle supports reading a vehicle identification number according to the target vehicle type information;
if the vehicle supports reading the vehicle identification number, acquiring, by the cloud server, the vehicle identification number via the vehicle communication device, generating the first unique identifier according to the vehicle identification number and the target vehicle type information, and transmitting the first unique identifier to the vehicle communication device; and
if the vehicle does not support reading the vehicle identification number, acquiring, by the cloud server, vehicle communication device identification from the vehicle communication device and a user identification from the user terminal, generating the second unique identifier according to the vehicle communication device identification, the user identification and the target vehicle type information, and transmitting the second unique identifier to the vehicle communication device.

Alternatively, if the vehicle supports reading the vehicle identification number, the cloud server searches for a reading instruction corresponding to the target vehicle type information in a pre-set vehicle type database, and transmits the reading instruction to the vehicle communication device;
the vehicle communication device reads a vehicle identification number of the vehicle according to the reading instruction, and transmits the vehicle identification number to the cloud server.

Alternatively, if the vehicle does not support reading the vehicle identification number, the cloud server accesses a target account of the user terminal, and determines whether the vehicle type information about the vehicle type file under the target account matches the target vehicle type information;
if matching, the cloud server selects a unique identifier of the vehicle type file to transmit to the vehicle communication device;
if not matching, the cloud server generates the second unique identifier according to the vehicle communication device identification, the user identification, and the target vehicle type information.

Alternatively, the vehicle communication device determines a plugging state of the vehicle with the vehicle communication device before the vehicle communication device transmits a unique identifier acquisition request to the cloud server;
if the plugging state is a plugged state, then the vehicle communication device reads an identification number to be verified of the vehicle according to a local configuration file, and determines whether the identification number to be verified matches a local vehicle identification number, and if matching, a local unique identifier is selected as the unique identifier, and if not matching, then a unique identifier acquisition request is transmitted to the cloud server;
when the plugging state is an unplugged state, the vehicle communication device selects a local unique identifier as the unique identifier.

Alternatively, after receiving the unique identifier, the vehicle communication device packaging the unique identifier and the battery data into battery data per frame, and transmitting the battery data per frame to the cloud server.

In a second aspect, an embodiment of the present application provides a battery data management method for a vehicle, applied to a cloud server, the method comprising:
acquiring target vehicle type information transmitted by a user terminal in response to a unique identifier acquisition request transmitted by a vehicle communication device, wherein the vehicle communication device is used for acquiring battery data from a vehicle;
determining whether the vehicle supports reading a vehicle identification number according to the target vehicle type information;
generating the first unique identifier according to the vehicle identification number and the target vehicle type information if the vehicle supports reading the vehicle identification number;
transmitting the first unique identifier to the vehicle communication device;
generating the second unique identifier according to the vehicle communication device identification, the user identification, and the target vehicle type information if the vehicle supports reading the vehicle identification number; and
transmitting the second unique identifier to the vehicle communication device.

Alternatively, if the vehicle supports reading the vehicle identification number, searching for a reading instruction corresponding to the target vehicle type information in a pre-set vehicle type database;
transmitting the reading instruction to the vehicle communication device to cause the vehicle communication device to return a vehicle identification number that the vehicle communication device has read from the vehicle according to the reading instruction.

Alternatively, if the vehicle does not support reading the vehicle identification number, accessing a target account of the user terminal;
determining whether the vehicle type information about the vehicle type file under the target account matches the target vehicle type information;
if matching, selecting a unique identifier of the vehicle type file to be transmitted to the vehicle communication device;
if not matching, generating the second unique identifier according to the vehicle communication device identification, the user identification, and the target vehicle type information.

In a third aspect, an embodiment of the present application provides a battery data management method for a vehicle, applied to a vehicle communication device, the method including:
transmitting a unique identifier acquisition request to a cloud server, so that the cloud server generates a first unique identifier or a second unique identifier for binding the battery data, wherein the first unique identifier is generated by the cloud server according to the vehicle identification number and the target vehicle type information when the cloud server determines that the vehicle supports reading the vehicle identification number according to the target vehicle type information transmitted by the user terminal; wherein the second unique identifier is generated by the cloud server according to the vehicle communication device identifier, the user identification and the target vehicle type information when the cloud server determines that the vehicle does not support reading the vehicle identification number according to the target vehicle type information transmitted by the user terminal; and
receiving a unique identifier transmitted by the cloud server.

Alternatively, before transmitting the unique identifier acquisition request to the cloud server, further comprising:
determining a plugging state of the vehicle communication device and the vehicle;
if the plugging state is an unplugged state, selecting a local unique identifier as the unique identifier;
if the plugging state is a plugged state, reading an identification number to be verified of the vehicle according to a local configuration file;
determining whether the identification number to be verified matches a local vehicle identification number according to the identification number to be verified and the local vehicle identification number;
if matching, selecting a local unique identifier as the unique identifier; and
if not matching, transmitting a unique identifier acquisition request to the cloud server.

Alternatively, further comprising:
packaging the unique identifier and the battery data into battery data per frame; and
transmitting the battery data per frame to the cloud server.

In a fourth aspect, embodiments of the present application provide a cloud server, comprising:
a first communication module;
at least one first processor electrically coupled to the first communication module; and
a first memory communicatively connected with the at least one first processor; wherein
the first memory stores instructions executable by the at least one first processor to enable the at least one first processor to perform the battery data management method as described above.

In a fifth aspect, an embodiment of the present application provides a vehicle communication device including:
a second communication module;
at least one second processor electrically coupled to the second communication module; and
a second memory communicatively connected with the at least one second processor; wherein
the second memory stores instructions executable by the at least one second processor to enable the at least one second processor to perform the battery data management method as described above.

In a sixth aspect, embodiments of the present application provide a battery data management system comprising:
the cloud server as described above;
the vehicle communication device as described above, the vehicle communication device being communicatively connected with the cloud server.

With the above-mentioned technical solution, the battery data management method for a vehicle and the system thereof, the cloud server and the vehicle communication device according to the embodiments of the present application have the following technical effects: a unique identifier that can bind the battery data acquired by the vehicle communication device from the vehicle is generated by the cloud server, it is possible to reliably manage the battery data, ensure that the source of the battery data belonging to a specific battery is accurately and uniquely matched, so as to establish twin data according to the battery data of a plurality of historical time periods of the specific battery at a later time, and accurately evaluate the health status of the specific battery.

### BRIEF DESCRIPTION OF THE DRAWINGS

One or more embodiments are illustrated by way of example and not by way of limitation in the figures of the accompanying drawings, in which elements having the same reference numeral designations represent similar elements, and in which the figures are not to scale unless otherwise specified.
FIG. 1 is a schematic diagram showing an application environment according to an embodiment of the present application;
FIG. 2 is a communication flow diagram between a vehicle communication device and a cloud server according to an embodiment of the present application;
FIG. 3 is a schematic flow diagram showing a battery data management method according to an embodiment of the present application;
FIG. 4a is a schematic flow diagram showing a battery data management method according to another embodiment of the present application;
FIG. 4b is a schematic flow diagram showing a battery data management method according to still another embodiment of the present application;
FIG. 4c is a schematic flow diagram showing a battery data management method according to still another embodiment of the present application;
FIG. 5a is a schematic flow diagram showing a battery data management method according to still another embodiment of the present application;
FIG. 5b is a schematic flow diagram showing a battery data management method according to still another embodiment of the present application;
FIG. 5c is a schematic flow diagram showing a battery data management method according to still another embodiment of the present application;
FIG. 6a is a schematic structural diagram showing a battery data management device according to an embodiment of the present application;
FIG. 6b is a schematic structural diagram showing a battery data management device according to another embodiment of the present application;
FIG. 6c is a schematic structural diagram showing a battery data management device according to still another embodiment of the present application;
FIG. 7a is a schematic structural diagram showing a battery data management device according to still another embodiment of the present application;
FIG. 7b is a schematic structural diagram showing a battery data management device according to still another embodiment of the present application;
FIG. 7c is a schematic structural diagram showing a battery data management device according to still another embodiment of the present application;
FIG. 8 is a schematic structural diagram showing a hardware of a cloud server according to an embodiment of the present application; and
FIG. 9 is a schematic structural diagram showing a hardware of a vehicle communication device according to an embodiment of the present application.

### DETAILED DESCRIPTION OF THE INVENTION

For the that the objects, aspects and advantages of the present application may be more clearly understood, a more particular description of the invention, briefly summarized below, may be had by reference to the appended drawings and examples. It should be understood that the particular embodiments described herein are illustrative only and are not restrictive. Based on the present embodiments in the present application, all other embodiments obtained by a person skilled in the art without involving any inventive effort are within the scope of protection of the present application.

It should be noted that, if not in conflict, the various features of the embodiments of the present application may be combined with of the present application. Additionally, while functional module divisions are performed in device schematics, with logical sequences shown in flowcharts, in some cases, steps shown or described may be performed in a different order than the block divisions in devices, or in flowcharts. Furthermore, the words "first", "second", "third", and the like, as used herein do not limit the data and order of execution, but merely distinguish the same item or similar item having substantially the same function or action.

A cloud server provided by an embodiment of the present application can execute a battery data management method for a vehicle as set forth in a corresponding embodiment below, wherein the cloud server here can be a physical server or a logical server formed by virtualizing a plurality of physical servers. The cloud server may also be a server group formed by a plurality of servers capable of communicatively connected with each other, and each functional module may be distributed on each server in the server cluster.

A vehicle communication device provided by an embodiment of the present application may perform the vehicle data management method described in the corresponding embodiment below, wherein the vehicle communication device herein may be any device that can communicate with a vehicle, for example, a Vehicle Communication Interface (VCI), a charging post, a Vehicle Network Intelligent Terminal Equipment (T-Box), or other devices.

### Embodiment 1

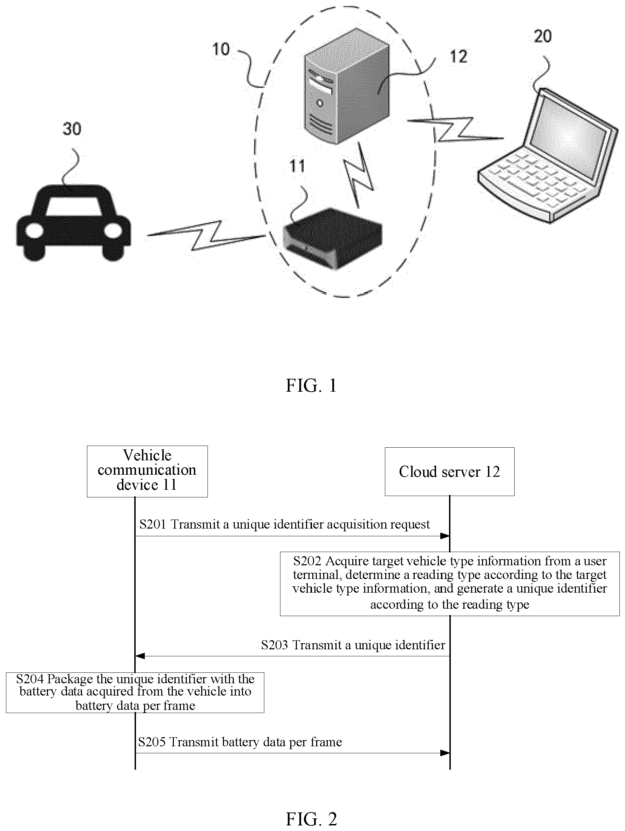

This embodiment provides an application environment. Referring to FIG. 1, the application environment includes a battery data management system 10, a user terminal 20, and a vehicle 30. The battery data management system 10 includes a vehicle communication device 11 and a cloud server 12. The vehicle communication device 11 is used for respectively communicatively connected with the vehicle 20 and the cloud server 12, and the cloud server 12 is also used for communicatively connected with the user terminal 20, wherein the communication connection comprises a wired communication connection or a wireless communication connection, wherein the wired communication connection comprises various types of communication connections for transmitting information using tangible media such as metal wires and optical fibers. Wireless communication connections include 5G communication, 4G communication, 3G communication, 2G communication, CDMA, Zig-Bee, Bluetooth, Wireless Broadband (Wi-Fi), Ultra-wide Band (UWB) and Near Field Communication (NFC), CDMA2000, GSM, Infrared (IR), ISM, RFID, UMTS/3GPPw/HSDPA, WiMAXWi-Fi or ZigBee, etc.

The vehicle communication device 11 is used for interacting with the cloud server 12 and the vehicle 30, and in the process of interacting with the cloud server 12, the vehicle communication device 11 can transmit various types of requests or data to the cloud server 12 and receive various types of data transmitted by the cloud server 12. The vehicle communication device 11 may transmit various types of data or instructions to the vehicle 30 and receive various types of vehicle data or information transmitted by the vehicle 30 during interaction with the vehicle 30.

The cloud server 12 is used for interacting with the vehicle communication device 11 and the user terminal 20, and can receive various types of requests, data transmitted by the vehicle communication device 11 and the user terminal 20 or transmit various types of data to the vehicle communication device 11 and the user terminal 20. In addition, the cloud server 12 can perform functions such as archiving and storing battery data of the vehicle 30 as a battery data management backstage of the vehicle 30.

The user terminal 20 is used for interacting with the cloud server 12, and can receive various types of data transmitted by the cloud server 12 or transmit various types of requests and data to the cloud server 12. For example, the user terminal 20 is installed with an application, and after the user terminal 20 logs into the application, interaction with the cloud server 12 is realized. The user terminal 20 may include a desktop computer, smartphone, tablet computer, or other terminal devices.

A vehicle 30 may be any type of vehicle, such as a car, bus, heavy truck, etc. An electronic control unit (ECU) is provided in the vehicle 30, the ECU records all the data/parameters of the vehicle 30, the vehicle 30 can perform a be communicatively connected with the vehicle communication device 11 via the ECU, and during the communication connection, the ECU can receive various types of instructions transmitted by the vehicle communication device 11 and transmit various types of data/parameters to the vehicle communication device 11.

Referring to FIG. 2, the battery data management flow between the vehicle communication device 11 and the cloud server 12 is as follows:
S201: the vehicle communication device 11 transmits a unique identifier acquisition request to the cloud server 12;
S202: after receiving the unique identifier acquisition request, the cloud server 12 acquires target vehicle type information from the user terminal 20, determines a reading type according to the target vehicle type information, and generates the unique identifier according to the reading type;
S203: the cloud server 12 transmits the unique identifier to the vehicle communication device 11;
S204: the vehicle communication device 11 packages the unique identifier and the battery data acquired from the vehicle into battery data per frame; and
S205: the vehicle communication device 11 transmits battery data per frame to the cloud server 12.

It will be appreciated that the battery data management flow described above is one embodiment enumerated herein, and that in some embodiments, the battery data management system 10 may employ other battery data management flows.

### Embodiment 2

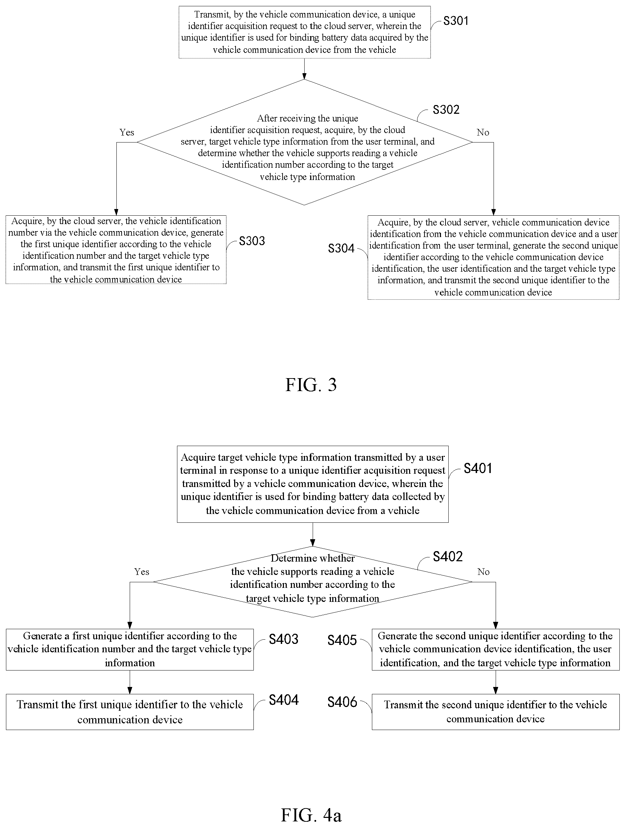

An embodiment of the present application provides a battery data management method for a vehicle, which is applied to a battery data management system 10. Referring to FIG. 3, the method includes:
S301: the vehicle communication device 11 transmits a unique identifier acquisition request to the cloud server 12, wherein the unique identifier is used for binding battery data acquired by the vehicle communication device 11 from the vehicle 30;
   By way of example and not limitation, a unique identifier is used to uniquely determine or match corresponding battery data. In some embodiments, the unique identifier may be composed of arbitrary characters, e.g. Arabic numerals, letters, punctuation marks, etc.
S302: after receiving the unique identifier acquisition request, the cloud server 12 acquires target vehicle type information from the user terminal 20, and determines whether the vehicle supports reading a vehicle identification number according to the target vehicle type information;
by way of example and not limitation, the target vehicle type information is vehicle type information corresponding to the vehicle 30, and the target vehicle type information includes, but is not limited to, the following vehicle type information: manufacturer, model, year, battery version, reading type of Vehicle Identification Number (VIN), etc. In some embodiments, the target vehicle type information comprises a reading type of the vehicle identification number, the vehicle identification number is used for uniquely determining the corresponding vehicle, and the reading type of the vehicle identification number comprises an automatic reading type and a non-automatic reading type, and if the reading type of the vehicle identification number of the corresponding vehicle is the automatic reading type, it is indicated that the vehicle communication device 11 can read the vehicle identification number from the corresponding vehicle by means of a reading instruction, that is, the corresponding vehicle supports reading the vehicle identification number, and if the reading type of the vehicle identification number of the corresponding vehicle is the non-automatic reading type, it is explained that the vehicle communication device 11 cannot read the vehicle identification number from the corresponding vehicle by the reading instruction, that is, the corresponding vehicle does not support reading the vehicle identification number.

A user can operate a user terminal 20, and logs in a specific application using a user account; after the login is successful, the user can select vehicle type information corresponding to a vehicle 30 in a vehicle type database provided in an interface of the specific application as target vehicle type information; and after the selection is completed, the user terminal 20 transmits the target vehicle type information to a cloud server.

S303: if the vehicle 30 supports reading the vehicle identification number, the cloud server 12 acquires the vehicle identification number via the vehicle communication device 11, generates a first unique identifier according to the vehicle identification number and the target vehicle type information, and transmits the first unique identifier to the vehicle communication device 11;
by way of example and not limitation, if the vehicle 30 supports reading the vehicle identification number, the cloud server 12 searches for a reading instruction corresponding to the target vehicle type information in the pre-set vehicle type database and transmits the reading instruction to the vehicle communication device 11, and the vehicle communication device 11 reads the vehicle identification number of the vehicle 30 according to the reading instruction and transmits the vehicle identification number to the cloud server 12, wherein the pre-set vehicle type database stores the corresponding relationship between the vehicle type information and the reading instruction, and the cloud server 12 can search the pre-set vehicle type database through the target vehicle type information to determine the reading instruction corresponding to the target vehicle type information.

After receiving that the cloud server 12 transmits the first unique identifier, the vehicle communication device 11 packages the first unique identifier and the battery data into battery data per frame, and transmits the battery data per frame to the cloud server 12. In addition, the vehicle communication device 11 stores the received first unique identifier as a local unique identifier for multiplexing so that the subsequent vehicle communication device 11 packages the real-time acquired battery data and the local unique identifier into battery data per frame.

It is worth mentioning that when the cloud server 12 transmits the first unique identifier to the vehicle communication device 11, corresponding configuration file is also transmitted to the vehicle communication device 11, and since the corresponding vehicle 30 supports reading the vehicle identification number, i.e., the cloud server 12 can acquire the vehicle identification number via the vehicle communication device 11, the corresponding configuration file comprises the vehicle identification number. The vehicle communication device 11 stores the received configuration file as a local configuration file, and accordingly, the vehicle identification number in the local configuration file as a local vehicle identification number.

S304: if the vehicle 30 does not support reading the vehicle identification number, the cloud server 12 acquires the vehicle communication device identification from the vehicle communication device 11 and the user identification from the user terminal 20, generates a second unique identifier according to the vehicle communication device identification, the user identification, and the target vehicle type information, and transmits the second unique identifier to the vehicle communication device 11.

By way of example and not limitation, the vehicle communication device identification is used to uniquely determine a corresponding vehicle communication device. The vehicle communication device identification may be composed of arbitrary character, for example, an Arabic numeral, a letter, a punctuation mark, etc. In some embodiments, the vehicle communication device identification is a serial number of the vehicle communication device. After the vehicle communication device 11 is communicatively connected with the cloud server 12, the vehicle communication device 11 may upload the vehicle communication device identification to the cloud server 12.

The user identification is used to uniquely identify the corresponding user, and in some embodiments, the user identification is an account number that the user logs into a particular application. A user can operate a user terminal 20, and uses a specific application to register an account; the user terminal 20 will transmit registration information to the cloud server 12, wherein the registration information comprises an account and a password needing to be registered; and the cloud server 12 allocates an account which is authorized and authenticated to the user according to the registration information. When the user completes the registration, the user can log in to a specific application using an account log in a specific application, and after the login is successful, the cloud server 12 can acquire the account number (user identification) of the user.

After receiving that the cloud server 12 transmits the second unique identifier, the vehicle communication device 11 packages the first unique identifier and the battery data into battery data per frame, and transmits the battery data per frame to the cloud server 12. In addition, the vehicle communication device 11 stores the received second unique identifier as a local unique identifier for multiplexing so that the subsequent vehicle communication device 11 packages the real-time acquired battery data and the local unique identifier into battery data per frame.

It is worth mentioning that when the cloud server 12 transmits the second unique identifier to the vehicle communication device 11, corresponding configuration file is also transmitted to the vehicle communication device 11, and since the corresponding vehicle 30 does not support reading the vehicle identification number, i.e., the cloud server 12 cannot acquire the vehicle identification number via the vehicle communication device 11, the corresponding configuration file does not comprises the vehicle identification number. The vehicle communication device 11 stores the received configuration file as a local configuration file.

It can be understood that since the data, algorithms, etc. corresponding to different types of batteries, different manufacturers of the same type or different batches of batteries are different, the battery version information of different vehicles is generally different, and if the battery version information cannot be obtained, the battery data cannot be reliably managed; therefore, the cloud server 12 can obtain the corresponding battery version information according to the target vehicle type information. Since the target vehicle type information does not uniquely identify the corresponding vehicle, and the vehicle identification number may uniquely identify the corresponding vehicle, the first unique identifier generated according to the vehicle identification number and the target vehicle type information may uniquely identify the battery data of the corresponding vehicle, thereby reliably managing the battery data corresponding to the particular vehicle.

As previously stated, if the corresponding vehicle 30 does not support reading the vehicle identification number, i.e., the cloud server 12 cannot obtain the vehicle identification number via the vehicle communication device 11, the cloud server 12 cannot generate a first unique identifier according to the vehicle identification number and the target vehicle type information; however, the cloud server 12 can generate a second unique identifier according to the target vehicle type information, the vehicle communication device identification and the user identification, and the second unique identifier can also uniquely determine the battery data of the corresponding vehicle, thereby reliably managing the battery data corresponding to the specific vehicle.

For example, suppose that a user A owns a vehicle A1, a user B owns a vehicle B1, the vehicle A is equipped with a vehicle communication device A2, the vehicle B is equipped with a vehicle communication device B2, the user A registers an account A3 for the vehicle A1, the user B registers an account B3 for the vehicle B1, the user A logs in a specific application through the account A3, and binds the vehicle communication device A2 with the account A3 after the login is successful, and the user B logs in the specific application through the account B3, and binds the vehicle communication device B2 with the account B3 after the login is successful.

If the account number A3 of the user A is always bound to the vehicle communication device A2, i.e., the vehicle communication device A2 is always mounted on the vehicle A1, at this moment, the vehicle communication device A2 can determine a corresponding vehicle, and the cloud server 12 can generate an identifier according to the identification of the vehicle communication device A2 and the target vehicle type information; however, if the user A replaces the vehicle communication device A2 mounted on the vehicle A1 with the vehicle communication device B2, the user B replaces the vehicle communication device B2 mounted on the vehicle B1 with the vehicle communication device A2, and if the account number is not taken into account, the cloud server 12 generates and transmits an identifier to the vehicle communication device A2 according to the identification of the vehicle communication device A2 and the target vehicle type information, the vehicle communication device A2 packages the identifier with the battery data of the vehicle B1 into battery data per frame, and the cloud server 12 stores the battery data per frame in a vehicle type file created according to the identifier, however, in practice, the vehicle type file is used for storing the battery data of the vehicle A1, thereby causing the twin data to be discontinuous in time, thereby failing to accurately evaluate the vehicle health status.

Therefore, the identifier generated from the vehicle communication device identification and the target vehicle type information does not uniquely determine the battery data of the corresponding vehicle. And when the corresponding vehicle 30 does not support reading the vehicle identification number, the cloud server 12 generates a unique identifier according to the vehicle communication device identification, the user identification (account number) and the target vehicle type information, wherein the unique identifier can uniquely determine the battery data of the corresponding vehicle and ensure that the battery data source of the corresponding vehicle is continuous in time, that is to say, can ensure the temporal continuity of the twin data.

As can be appreciated, the present embodiment can improve flexibility of battery data management by allowing a user to unbundle a bound vehicle communication device or bind a new vehicle communication device under his or her account on the basis of ensuring temporal continuity of the twin data. In addition, by introducing user identification (account number) for rights identification, different users cannot learn the data of other users, so as to ensure the privacy or security of data.

Thus, the present embodiment can reliably manage the battery data to ensure that the source of the battery data belonging to a specific battery is accurately and uniquely matched, so that the twin data is later established based on the battery data of a plurality of historical time periods of the specific battery to accurately assess the health status of the specific battery.

In addition, the present embodiment considers the case where the vehicle supports reading the vehicle identification number and the case where the vehicle does not support reading the vehicle identification number, and in any case, it is possible to generate a unique identifier that can uniquely determine the battery data of the corresponding vehicle, thereby ensuring reliable management of the battery data while increasing the flexibility of unique identifier generation.

Note that the "unique identifier" described herein may be any one of the "first unique identifier" and the "second unique identifier" described herein.

In some embodiments, after generating a second unique identifier according to the vehicle communication device identifier, the user identification and the target vehicle type information, the cloud server 12 creates a vehicle type file according to the second unique identifier, and the vehicle type file uniquely determines battery data of the corresponding vehicle for storing the battery data of the corresponding vehicle, which is equivalent to a database of the battery data of the corresponding vehicle.

It can be understood that after the cloud server 12 generates the second unique identifier, the second unique identifier is transmitted to the vehicle communication device 11; the vehicle communication device 11 packages the second unique identifier and the battery data into battery data per frame, and transmits the battery data per frame to the cloud server 12; and the cloud server 12 stores the battery data per frame into a vehicle type file corresponding to the second unique identifier.

In some embodiments, if the vehicle does not support reading the vehicle identification number, the cloud server 12 accesses a target account of the user terminal 20, determines whether the vehicle type information about the vehicle type file under the target account matches the target vehicle type information, and if so, it is indicated that the vehicle type file including the target vehicle type information already exists under the target account, and at this moment, the cloud server 12 selects a unique identifier of the vehicle type file to transmit to the vehicle communication device 11, without generating a second unique identifier by the cloud server 12 according to the vehicle communication device identifier, the user identification and the target vehicle type information. If not matching, it means that there is no vehicle type file including the target vehicle type information under the target account, and at this time, the cloud server 12 needs to generate a second unique identifier according to the vehicle communication device identification, the user identification and the target vehicle type information.

In some embodiments, before the vehicle communication device 11 transmits the unique identifier acquisition request to the cloud server 12, the vehicle communication device 11 determines a plugging state of the vehicle 30 and the vehicle communication device 11; if the plugging state is a plugged state, the vehicle communication device 11 reads an identification number to be verified of the vehicle according to a local configuration file, and determines whether the identification number to be verified matches the local vehicle identification number; as previously stated, the local configuration file corresponds to the local unique identifier; and if the unique identifier is generated according to the vehicle identification number and target vehicle type information, the local configuration file comprises a corresponding vehicle identification number (a local identification number); therefore, if the identification number to be verified matches the local vehicle identification number, it is indicated that the local unique identifier is a unique identifier which can uniquely determine the battery data of the vehicle and is transmitted by the cloud server 12; at this moment, the vehicle communication device 11 can select the local unique identifier as the unique identifier; if the identification number to be verified does not match the local vehicle identification number, it is indicated that the local unique identifier is not a unique identifier which can uniquely determine the battery data of the vehicle and is transmitted by the cloud server 12; at this moment, the vehicle communication device 11 needs to transmit a unique identifier acquisition request to the cloud server 12 so that the cloud server 12 generates a unique identifier that can uniquely determine the battery data of the vehicle and returns the unique identifier.

For example, it is assumed that the preceding vehicle in the plugging state with the vehicle communication device 11 is the vehicle C1, and the following vehicle in the plugging state with the vehicle communication device 11 is the vehicle D1. If the vehicle C1 and the vehicle D1 are the same vehicle and both support reading the vehicle identification number, and the vehicle communication device 11 stores a unique identifier and a configuration file corresponding to the vehicle C1 (the configuration file comprises the vehicle identification number of the vehicle C1), then when the vehicle communication device 11 and the vehicle D1 are in a plugging state, the vehicle communication device 11 reads the identification number to be verified of the vehicle D1 according to the local configuration file, and the vehicle communication device 11 determines that the identification number to be verified matches the local vehicle identification number, and selects the local unique identifier as the unique identifier.

### Embodiment 3:

An embodiment of the present application provides a battery data management method for a vehicle, wherein the present embodiment selects a cloud server as an executive subject to execute the battery data management method provided by the present embodiment. Referring to FIG. 4a, the battery data management method includes:
S401: target vehicle type information transmitted by a user terminal is acquired in response to a unique identifier acquisition request transmitted by a vehicle communication device, wherein the unique identifier is used for binding battery data collected by the vehicle communication device from a vehicle;
S402: whether the vehicle supports reading a vehicle identification number is determined according to the target vehicle type information;
S403: if the vehicle supports reading the vehicle identification number, a first unique identifier is generated according to the vehicle identification number and the target vehicle type information;
S404: transmit the first unique identifier to the vehicle communication device;
S405: if the vehicle does not support reading the vehicle identification number, a second unique identifier is generated according to the vehicle communication device identification, the user identification, and the target vehicle type information; and
S406: the second unique identifier is tranmitted to the vehicle communication device.

Thus, the present embodiment can reliably manage the battery data to ensure that the source of the battery data belonging to a specific battery is accurately and uniquely matched, so that the twin data is later established based on the battery data of a plurality of historical time periods of the specific battery to accurately assess the health status of the specific battery.

In addition, the present embodiment considers the case where the vehicle supports reading the vehicle identification number and the case where the vehicle does not support reading the vehicle identification number, and in any case, it is possible for the cloud server to generate a unique identifier that can uniquely determine the battery data of the corresponding vehicle, thereby ensuring reliable management of the battery data while increasing the flexibility of unique identifier generation.

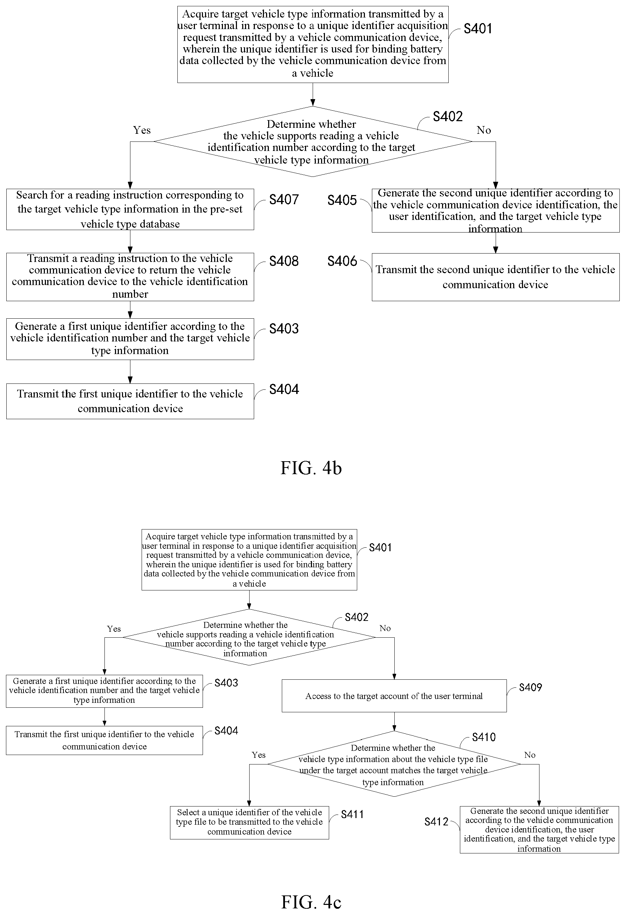

In some embodiments, referring to FIG. 4b, the battery data management method further comprises:
S407: if the vehicle supports reading the vehicle identification number, a reading instruction corresponding to the target vehicle type information is searched in a pre-set vehicle type database;
S408: transmit a reading instruction to the vehicle communication device, so that the vehicle communication device reads the vehicle identification number of the vehicle according to the reading instruction, and returns the vehicle identification number.

In some embodiments, referring to FIG. 4c, the battery data management method further comprises:
S409: if the vehicle does not support reading the vehicle identification number, a target account of the user terminal is accessed;
S410: whether the vehicle type information about the vehicle type file under the target account matches the target vehicle type information is determined;
S411: if matching, a unique identifier of the vehicle type file is selected to be transmitted to the vehicle communication device; and
S412: if not matching, a second unique identifier is generated according to the vehicle communication device identification, the user identification, and the target vehicle type information.

### Embodiment 4:

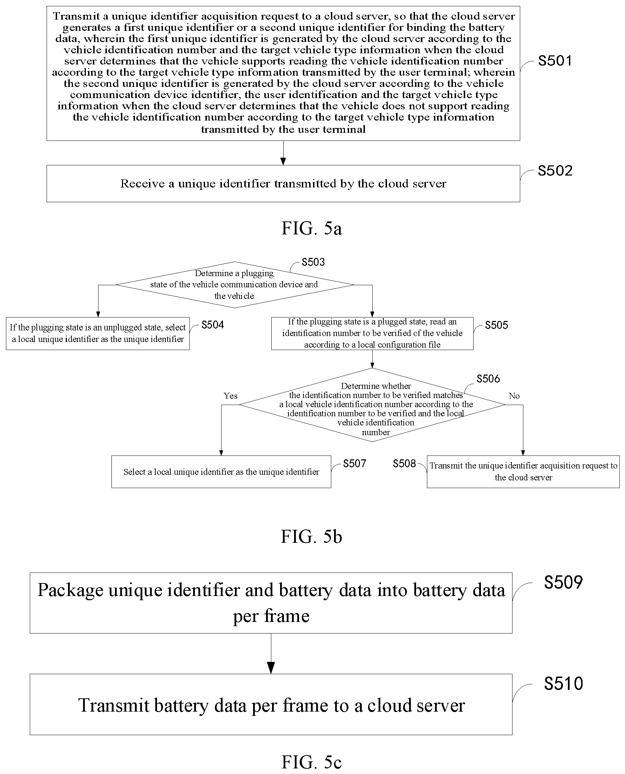

An embodiment of the present application provides a battery data management method for a vehicle, wherein the present embodiment selects a vehicle communication device as an executive subject to execute the battery data management method provided by the present embodiment. Referring to FIG. 5a, the battery data management method includes:
S501: a unique identifier acquisition request is tranmitted to a cloud server, so that the cloud server generates a first unique identifier or a second unique identifier for binding the battery data, wherein the first unique identifier is generated by the cloud server according to the vehicle identification number and the target vehicle type information when the cloud server determines that the vehicle supports reading the vehicle identification number based on the target vehicle type information transmitted by the user terminal; wherein the second unique identifier is generated by the cloud server according to the vehicle communication device identifier, the user identification and the target vehicle type information when the cloud server determines that the vehicle does not support reading the vehicle identification number based on the target vehicle type information transmitted by the user terminal;
S502: the unique identifier transmitted by the cloud server is received.

In some embodiments, before performing S51, referring to FIG. 5b, the battery data management method further comprises:
S503: a plugging state of the vehicle communication device and the vehicle is determined;
S504: if the plugging state is an unplugged state, a local unique identifier is selected as the unique identifier;
S505: if the plugging state is a plugged state, an identification number to be verified of the vehicle is read according to a local configuration file;
S506: whether the identification number to be verified matches a local vehicle identification number is determined according to the identification number to be verified and the local vehicle identification number;
S507: if matching, a local unique identifier is selected as the unique identifier;
S508: if not matching, a unique identifier acquisition request is transmitted to the cloud server.

In some embodiments, referring to FIG. 5c, the battery data management method further comprises:
S509: the unique identifier and battery data are packaged into battery data per frame; and
S510: the battery data per frame is transmitted to the cloud server.

### Embodiment 5:

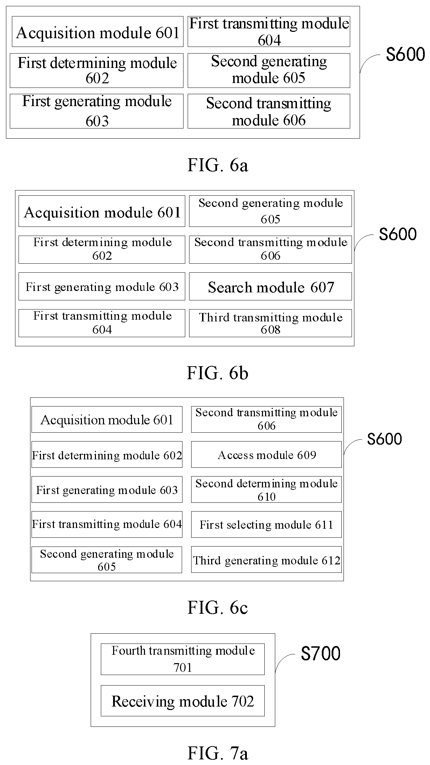

Embodiments of the present application provide a battery data management device for a vehicle. Referring to FIG. 6a, the battery data management device 600 includes an acquisition module 601, a first determining module 602, a first generating module 603, a first transmitting module 604, a second generating module 605, and a second transmitting module 606.

The acquisition module 601 can acquire target vehicle type information transmitted by a user terminal in response to a unique identifier acquisition request transmitted by a vehicle communication device, wherein the unique identifier is used for binding battery data acquired by the vehicle communication device from the vehicle; the determining module 602 is configured to determine whether the vehicle supports reading a vehicle identification number according to the target vehicle type information; the first generating module 603 is configured to generate a first unique identifier according to the vehicle identification number and the target vehicle type information when the vehicle supports reading the vehicle identification number; the first transmitting module 604 is configured to transmit the first unique identifier to the vehicle communication device; the second generating module 605 is configured to generate a second unique identifier according to the vehicle communication device identification, the user identification, and the target vehicle type information when the vehicle supports reading the vehicle identification number, and the second transmitting module 606 is configured to transmit the second unique identifier to the vehicle communication device.

In some embodiments, referring to FIG. 6b, the battery data management device 600 also includes a search module 607 and a third transmitting module 608.

The search module 607 is configured to search for a reading instruction corresponding to the target vehicle type information in the pre-set vehicle type database when the vehicle supports reading the vehicle identification number, and the third transmitting module 608 is configured to transmit the reading instruction to the vehicle communication device so that the vehicle communication device returns the vehicle identification number, wherein the vehicle identification number is the vehicle identification number read from the vehicle by the vehicle communication device according to the reading instruction.

In some embodiments, referring to FIG. 6c, the battery data management device 600 further includes an access module 609, a second determining module 610, a first selecting module 611, and a third generating module 612.

The access module 609 is configured to access a target account of the user terminal when the vehicle does not support reading the vehicle identification number; the second determining module 610 determines whether the vehicle type information about the vehicle type file under the target account matches the target vehicle type information; the first selecting module 611 is configured to select a unique identifier of the vehicle type file to transmit to the vehicle communication device when the vehicle type information about the vehicle type file under the target account matches the target vehicle type information; and the second generating module 612 is configured to generate a second unique identifier according to the vehicle communication device identification, the user identification, and the target vehicle type information when the vehicle type information of the vehicle type file under the target account does not match the target vehicle type information.

### Embodiment 6:

Embodiments of the present application provide a battery data management device for a vehicle. Referring to FIG. 7a, the battery data management device 700 includes a fourth transmitting module 701 and a receiving module 702.

The fourth transmitting module 701 may transmit a unique identifier acquisition request to a cloud server, so that the cloud server generates a first unique identifier or a second unique identifier for binding the battery data, wherein the first unique identifier is generated by the cloud server according to the vehicle identification number and the target vehicle type information when the cloud server determines that the vehicle supports reading the vehicle identification number according to the target vehicle type information transmitted by the user terminal; wherein the second unique identifier is generated by the cloud server according to the vehicle communication device identifier, the user identification and the target vehicle type information when the cloud server determines that the vehicle does not support reading the vehicle identification number according to the target vehicle type information transmitted by the user terminal. The receiving module 702 may receive the unique identifier transmitted by the cloud server.

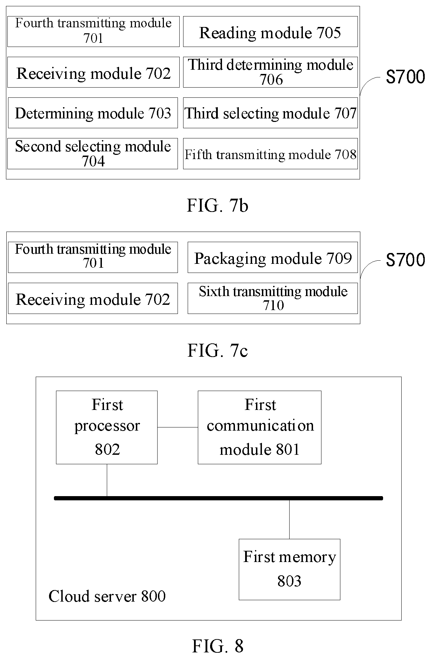

In some embodiments, referring to FIG. 7b, the battery data management device 700 further comprises a determining module 703, a second selecting module 704, a reading module 705, a third determining module 706, a third selecting module 707 and a fifth transmitting module 708.

The determining module 703 can determine a plugging state of a vehicle communication device and a vehicle; the second selecting module 704 is configured to select a local unique identifier as a unique identifier when the plugging state is a plugged state; the reading module 705 is configured to read an identification number to be verified of the vehicle according to a local configuration file when the plugging state is an unplugged state; a third determining module 706 is configured to determine whether the identification number to be verified matches the local vehicle identification number according to the identification number to be verified and the local vehicle identification number; the third selecting module 707 is configured to select the local unique identifier as the unique identifier when the identification number to be verified matches the local vehicle identification number; and the fifth transmitting module 708 is configured to transmit the unique identifier acquisition request to the cloud server when the identification number to be verified does not match the local vehicle identification number.

In some embodiments, referring to FIG. 7c, the battery data management device 700 also includes a packaging module 709 and a sixth transmitting module 710.

The packaging module 709 is configured to package the unique identifier and the battery data into battery data per frame, and the sixth transmitting module 710 is configured to transmit the battery data per frame to the cloud server.

It should be noted that the above-mentioned battery data management device can execute the battery data management method provided by the embodiments of the present application, and has functional modules and beneficial effects corresponding to the execution method. Technical details not described in detail in the present embodiment of the battery data management device can be found in the battery data management method provided in the present embodiment of the present application.

Referring to FIG. 8, FIG. 8 is a schematic structural diagram showing a hardware of a cloud server provided in an embodiment of the present application. As shown in FIG. 8, the cloud server comprises a first communication module 801, one or more first processors 802 and a first memory 803. One first processor 802 is exemplified in FIG. 8.

The first communication module 801 is used to be communicatively connected with the vehicle communication device and the user terminal, and the first processor 81 can realize interaction with the vehicle communication device or with the user terminal by controlling the first communication module 801. The first communication module 801 is also electrically coupled to the first processor 802.

The processors 802 and the memory 803 may be connected via a bus or in other ways, and via a bus connection exemplified in FIG. 8.

The memory 803, as a non-volatile computer-readable storage medium, can be used to store non-volatile software programs, non-volatile computer-executable programs, and modules such as program instructions/modules corresponding to the battery data management method in the present embodiment of the present application. The first processor 802 executes various functional applications of the battery data management device and data processing by executing the non-volatile software programs, instructions and modules stored in the first memory 803, i.e., implements the battery data management method provided by the above-described method embodiment and the functions of the respective modules or units of the above-described device embodiment.

The memory 803 may include a high speed random access memory and may also include a non-volatile memory, such as at least one magnetic disk storage device, flash memory device, or other non-volatile solid state storage devices. In some embodiments, the memory 803 may optionally include memories remotely located with respect to a processor 802, which may be connected to the processor 802 via a network. Examples of such networks include, but are not limited to, the Internet, intranets, local area networks, mobile communication networks, and combinations thereof.

The program instructions/modules are stored in the first memory 803 and when executed by the one or more first processors 802 perform the battery data management method for any one of the method embodiments described above.

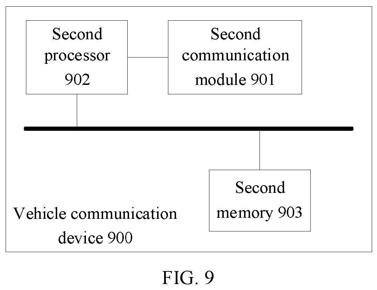

Referring to FIG. 9, FIG. 9 is a schematic structural diagram showing a hardware of a cloud server provided by an embodiment of the present application. As shown in FIG. 9, the cloud server comprises a second communication module 901, one or more second processors 902 and a second memory 903. One second processor 902 is exemplified in FIG. 9.

The first communication module 901 is configured to be communicatively connected with the vehicle and the cloud server, and the second processor 901 can realize interaction with the vehicle or with the cloud server by controlling the first communication module 901. The second communication module 901 is also electrically coupled to the second processor 902.

The processors 902 and the memory 903 may be connected via a bus or in other ways, and via a bus connection exemplified in FIG. 9.

The second memory 903, as a non-volatile computer-readable storage medium, can be used to store non-volatile software programs, non-volatile computer-executable programs, and modules such as program instructions/modules corresponding to the battery data management method in the present embodiment of the present application. The second processor 902 executes various functional applications of the battery data management device and data processing by executing the non-volatile software programs, instructions and modules stored in the second memory 903, i.e., implements the battery data management method provided by the above-described method embodiment and the functions of the respective modules or units of the above-described device embodiment.

The second memory 903 may include a high speed random access memory and may also include a non-volatile memory, such as at least one magnetic disk storage device, flash memory device, or other non-volatile solid state storage devices. In some embodiments, the second memory 903 may optionally include memories remotely located with respect to a second processor 902, which may be connected to the second processor 902 via a network. Examples of such networks include, but are not limited to, the Internet, intranets, local area networks, mobile communication networks, and combinations thereof.

The program instructions/modules are stored in the second memory 903 and when executed by the one or more second processors 92, perform the battery data management method for any one of the method embodiments described above.

Embodiments of the present application also provide a non-volatile computer storage medium having stored thereon computer-executable instructions that, when executed by one or more processors, such as one processor 802 in FIG. 8 or one processor 902 in FIG. 9, may cause the one or more processors to perform the battery data management method in any one of the method embodiments described above.

Embodiments of the present application also provide a computer program product comprising a computer program stored on a non-volatile computer readable storage medium, the computer program comprising program instructions which, when executed by an electronic device, cause the electronic device to perform any one of the battery data management methods described herein.

The device or device embodiments described above are merely illustrative, wherein the unit modules illustrated as separate components may or may not be physically separated, and the components shown as modular units may or may not be physical units, i.e., may be located in one place, or may also be distributed over multiple network modular units. Some or all the modules may be selected according to actual needs to achieve the purpose of the solution of the present embodiment.

From the above description of the present embodiments, it will be clear to a person skilled in the art that the present embodiments can be implemented by means of software plus a general-purpose hardware platform, but also by means of hardware. With this in mind, some of the above-described aspects in essence or in a contribution to the art may be embodied in the form of a software product, which may be stored on a readable storage medium, such as an ROM/RAM, magnetic diskette, optical disk, etc. containing instructions for causing a computer device, which may be a personal computer, a server, or a network appliance, etc. to perform the methods of the various embodiments or portions of the present embodiments.

Finally, it is noted that the present application may be embodied in many different forms and should not be construed as limited to the present embodiments set forth herein; rather, these embodiments are provided so that the present disclosure will be thorough and complete. In addition, the above-mentioned technical features continue to be combined with each other, and there are many other changes in different aspects of the present application as described above, all being considered as the scope of disclosure contained in the description of the present application; further, it will be apparent to a person skilled in the art from the foregoing description that all such modifications and variations are considered to fall within the scope of the appended claims.

The scope of protection of this application should be determined by the scope of protection of the claims.

## Claims

1. A battery data management method for a vehicle, applied to a battery data management system (10), wherein the battery data management system (10) comprises a vehicle communication device (11) and a cloud server (12), the vehicle communication device (11) is used to be communicatively connected with the vehicle (30) and the cloud server (12), respectively, and the cloud server is also used to be communicatively connected with the user terminal (20), the method comprising:
transmitting, by the vehicle communication device (11), a unique identifier acquisition request to the cloud server, wherein the unique identifier is used for binding battery data acquired by the vehicle communication device (11) from the vehicle (30);
after receiving the unique identifier acquisition request, acquiring, by the cloud server (12), target vehicle type information from the user terminal (20), and determining whether the vehicle supports reading a vehicle identification number according to the target vehicle type information;
if the vehicle (30) supports reading the vehicle identification number, acquiring, by the cloud server (12), the vehicle identification number via the vehicle communication device (11), generating a first unique identifier according to the vehicle identification number and the target vehicle type information, and transmitting the first unique identifier to the vehicle communication device (11); **characterized in that**:
if the vehicle (30) does not support reading the vehicle identification number, acquiring, by the cloud server (12), vehicle communication device identification from the vehicle communication device (11) and a user identification from the user terminal (20), generating a second unique identifier according to the vehicle communication device identification, the user identification and the target vehicle type information, and transmitting the second unique identifier to the vehicle communication device (11);
wherein if the vehicle (30) does not support reading the vehicle identification number, the cloud server (12) accesses a target account of the user terminal (20), and determines whether the vehicle type information about a vehicle type file under the target account matches the target vehicle type information;
if matching, the cloud server (12) selects a unique identifier of the vehicle type file to transmit to the vehicle communication device (11); and
if not matching, the cloud server (12) generates the second unique identifier according to the vehicle communication device identification, the user identification, and the target vehicle type information.

2. The method according to claim 1, **characterized in that** if the vehicle (30) supports reading the vehicle identification number, the cloud server (12) searches for a reading instruction corresponding to the target vehicle type information in a pre-set vehicle type database, and transmits the reading instruction to the vehicle communication device(11);
the vehicle communication device (11) reads a vehicle identification number of the vehicle (30) according to the reading instruction, and transmits the vehicle identification number to the cloud server (12).

3. The method according to claim 1, **characterized in that**
the vehicle communication device (11) determines a plugging state of the vehicle (30) with the vehicle communication device (11) before the vehicle communication device (11) transmits a unique identifier acquisition request to the cloud server (12);
if the plugging state is a plugged state, then the vehicle communication device (11) reads an identification number to be verified of the vehicle (30) according to a local configuration file, and determines whether the identification number to be verified matches a local vehicle identification number, and if matching, a local unique identifier is selected as the unique identifier, and if not matching, then a unique identifier acquisition request is transmitted to the cloud server (12);
when the plugging state is an unplugged state, the vehicle communication device (11) selects a local unique identifier as the unique identifier.

4. The method according to any one of claims 1 to 3, **characterized by** further comprising:
after receiving the unique identifier, the vehicle communication device (11) packaging the unique identifier and the battery data into battery data per frame, and transmitting the battery data per frame to the cloud server (12).

5. A battery data management method for a vehicle, applied to a cloud server (12), the method comprising:
acquiring target vehicle type information transmitted by a user terminal (20) in response to a unique identifier acquisition request transmitted by a vehicle communication device (11), wherein the unique identifier is used for binding battery data acquired by the vehicle communication device (11) from a vehicle (30);
determining whether the vehicle (30) supports reading a vehicle identification number according to the target vehicle type information;
generating the first unique identifier according to the vehicle identification number and the target vehicle type information if the vehicle (30) supports reading the vehicle identification number;
transmitting the first unique identifier to the vehicle communication device (11); **characterized by**:
generating the second unique identifier according to the vehicle communication device identification, the user identification, and the target vehicle type information if the vehicle (30) does not support reading the vehicle identification number; and
transmitting the second unique identifier to the vehicle communication device (11);
wherein if the vehicle (30) does not support reading the vehicle identification number, accessing a target account of the user terminal (20);
determining whether the vehicle type information about the vehicle type file under the target account matches the target vehicle type information;
if matching, selecting a unique identifier of the vehicle type file to be transmitted to the vehicle communication device(11); and
if not matching, generating the second unique identifier according to the vehicle communication device identification, the user identification, and the target vehicle type information.

6. The method according to claim 5, **characterized by** further comprising:
if the vehicle (30) supports reading the vehicle identification number, searching for a reading instruction corresponding to the target vehicle type information in a pre-set vehicle type database;
transmitting the reading instruction to the vehicle communication device (11) to cause the vehicle communication device(11) to return a vehicle identification number that the vehicle communication device has read from the vehicle (30) according to the reading instruction.

7. A battery data management method for a vehicle (30), applied to a vehicle communication device (11) for acquiring battery data of the vehicle (30), the method comprising:
transmitting a unique identifier acquisition request to a cloud server (12), so that the cloud server (12) generates a first unique identifier or a second unique identifier for binding the battery data, wherein the first unique identifier is generated by the cloud server (12) according to the vehicle identification number and the target vehicle type information when the cloud server (12) determines that the vehicle (30) supports reading the vehicle identification number according to the target vehicle type information transmitted by a user terminal (20); **characterized in that** the second unique identifier is generated by the cloud server (12) according to the vehicle communication device identifier, the user identification and the target vehicle type information when the cloud server (12) determines that the vehicle (30) does not support reading the vehicle identification number according to the target vehicle type information transmitted by the user terminal (20); and
receiving a unique identifier transmitted by the cloud server (12);
wherein if the vehicle (30) does not support reading the vehicle identification number, accessing a target account of the user terminal (20);
determining whether the vehicle type information about the vehicle type file under the target account matches the target vehicle type information;
if matching, selecting a unique identifier of the vehicle type file to be transmitted to the vehicle communication device(11); and
if not matching, generating the second unique identifier according to the vehicle communication device identification, the user identification, and the target vehicle type information.

8. The method according to claim 7, before transmitting the unique identifier acquisition request to the cloud server (12), **characterized by** further comprising:
determining a plugging state of the vehicle communication device (11) and the vehicle (30);
if the plugging state is an unplugged state, selecting a local unique identifier as the unique identifier;
if the plugging state is a plugged state, reading an identification number to be verified of the vehicle (30) according to a local configuration file;
determining whether the identification number to be verified matches a local vehicle identification number according to the identification number to be verified and the local vehicle identification number;
if matching,selecting a local unique identifier as the unique identifier; and
if not matching, transmitting a unique identifier acquisition request to the cloud server (12).

9. The method according to claim 7 or 8, **characterized by** further comprising:
packaging the unique identifier and the battery data into battery data per frame; and
transmitting the battery data per frame to the cloud server (12).

10. A cloud server (800), **characterized by** comprising:
a first communication module (801);
at least one first processor (802) electrically coupled to the first communication module (801); and
a first memory (803) communicatively connected with the at least one first processor (802); wherein
the first memory (803) stores instructions executable by the at least one first processor (802) to enable the at least one first processor (802) to perform the battery data management method according to claims 5 or 6.

11. A vehicle communication device (900), **characterized by** comprising:
a second communication module (901);
at least one second processor (902) electrically coupled to the second communication module(901); and
a second memory(903) communicatively connected with the at least one second processor (902); wherein
the second memory (903) stores instructions executable by the at least one second processor (902) to enable the at least one second processor (902) to perform the battery data management method according to any one of claims 7 to 9.

12. A battery data management system, **characterized by** comprising:
the cloud server (800) according to claim 10;
the vehicle communication device (900) according to claim 11, the vehicle communication device (900) being communicatively connected with the cloud server (800).

## Patentansprüche

1. Batteriedatenverwaltungsverfahren für ein Fahrzeug, angewendet auf ein Batteriedatenverwaltungssystem (10), wobei das Batteriedatenverwaltungssystem (10) eine Fahrzeugkommunikationsvorrichtung (11) und einen Cloud-Server (12) umfasst, die Fahrzeugkommunikationsvorrichtung (11) dazu dient, jeweils kommunikativ mit dem Fahrzeug (30) und dem Cloud-Server (12) verbunden zu werden, und der Cloud-Server ferner dazu dient, kommunikativ mit dem Benutzerendgerät (20) verbunden zu werden, wobei das Verfahren umfasst:
Senden, durch die Fahrzeugkommunikationsvorrichtung (11), einer Anforderung zur Erlangung einer eindeutigen Kennung an den Cloud-Server, wobei die eindeutige Kennung zum Binden von Batteriedaten verwendet wird, die von der Fahrzeugkommunikationsvorrichtung (11) aus dem Fahrzeug (30) erlangt werden;
nach dem Empfangen der Anforderung zur Erlangung einer eindeutigen Kennung, Erlangen, durch den Cloud-Server (12), von Zielfahrzeugtypinformationen von dem Benutzerendgerät (20) und Bestimmen, ob das Fahrzeug das Lesen einer Fahrzeugidentifikationsnummer anhand der Zielfahrzeugtypinformationen unterstützt;
falls das Fahrzeug (30) das Lesen der Fahrzeugidentifikationsnummer unterstützt, Erlangen, durch den Cloud-Server (12), der Fahrzeugidentifikationsnummer über die Fahrzeugkommunikationsvorrichtung (11), Erzeugen einer ersten eindeutigen Kennung anhand der Fahrzeugidentifikationsnummer und der Zielfahrzeugtypinformationen und Senden der ersten eindeutigen Kennung an die Fahrzeugkommunikationsvorrichtung (11);
**dadurch gekennzeichnet, dass**:
falls das Fahrzeug (30) das Lesen der Fahrzeugidentifikationsnummer nicht unterstützt, Erlangen, durch den Cloud-Server (12), einer Fahrzeugkommunikationsvorrichtungs-Identifikation von der Fahrzeugkommunikationsvorrichtung (11) und einer Benutzeridentifikation von dem Benutzerendgerät (20), Erzeugen einer zweiten eindeutigen Kennung anhand der Fahrzeugkommunikationsvorrichtungs-Identifikation, der Benutzeridentifikation und der Zielfahrzeugtypinformationen und Senden der zweiten eindeutigen Kennung an die Fahrzeugkommunikationsvorrichtung (11);
wobei, falls das Fahrzeug (30) das Lesen der Fahrzeugidentifikationsnummer nicht unterstützt, der Cloud-Server (12) auf ein Zielkonto des Benutzerendgeräts (20) zugreift und bestimmt, ob die Fahrzeugtypinformationen bezüglich einer Fahrzeugtypdatei unter dem Zielkonto mit den Zielfahrzeugtypinformationen übereinstimmen;
im Falle einer Übereinstimmung wählt der Cloud-Server (12) eine eindeutige Kennung der Fahrzeugtypdatei aus, um sie an die Fahrzeugkommunikationsvorrichtung (11) zu senden; und
im Falle einer Nichtübereinstimmung erzeugt der Cloud-Server (12) die zweite eindeutige Kennung anhand der Fahrzeugkommunikationsvorrichtungs-Identifikation, der Benutzeridentifikation und der Zielfahrzeugtypinformationen.

2. Verfahren nach Anspruch 1, **dadurch gekennzeichnet, dass**
falls das Fahrzeug (30) das Lesen der Fahrzeugidentifikationsnummer unterstützt, der Cloud-Server (12) eine Leseanweisung, die den Zielfahrzeugtypinformationen entspricht, in einer voreingestellten Fahrzeugtypdatenbank sucht und die Leseanweisung an die Fahrzeugkommunikationsvorrichtung (11) sendet;
die Fahrzeugkommunikationsvorrichtung (11) eine Fahrzeugidentifikationsnummer des Fahrzeugs (30) anhand der Leseanweisung liest und die Fahrzeugidentifikationsnummer an den Cloud-Server (12) sendet.

3. Verfahren nach Anspruch 1, **dadurch gekennzeichnet, dass**
die Fahrzeugkommunikationsvorrichtung (11) einen Steckzustand des Fahrzeugs (30) mit der Fahrzeugkommunikationsvorrichtung (11) bestimmt, bevor die Fahrzeugkommunikationsvorrichtung (11) eine Anforderung zur Erlangung einer eindeutigen Kennung an den Cloud-Server (12) sendet;
falls der Steckzustand ein gesteckter Zustand ist, dann liest die Fahrzeugkommunikationsvorrichtung (11) eine zu verifizierende Identifikationsnummer des Fahrzeugs (30) anhand einer lokalen Konfigurationsdatei und bestimmt, ob die zu verifizierende Identifikationsnummer mit einer lokalen Fahrzeugidentifikationsnummer übereinstimmt, und im Falle einer Übereinstimmung wird eine lokale eindeutige Kennung als die eindeutige Kennung ausgewählt, und im Falle einer Nichtübereinstimmung wird dann eine Anforderung zur Erlangung einer eindeutigen Kennung an den Cloud-Server (12) gesendet;
wenn der Steckzustand ein ungesteckter Zustand ist, wählt die Fahrzeugkommunikationsvorrichtung (11) eine lokale eindeutige Kennung als die eindeutige Kennung aus.

4. Verfahren nach einem der Ansprüche 1 bis 3, **dadurch gekennzeichnet, dass** es ferner umfasst:
nach dem Empfangen der eindeutigen Kennung, Verpacken, durch die Fahrzeugkommunikationsvorrichtung (11), der eindeutigen Kennung und der Batteriedaten in Batteriedaten pro Rahmen und Senden der Batteriedaten pro Rahmen an den Cloud-Server (12).

5. Batteriedatenverwaltungsverfahren für ein Fahrzeug, angewendet auf einen Cloud-Server (12), wobei das Verfahren umfasst:
Erlangen von Zielfahrzeugtypinformationen, die von einem Benutzerendgerät (20) als Reaktion auf eine von einer Fahrzeugkommunikationsvorrichtung (11) gesendete Anforderung zur Erlangung einer eindeutigen Kennung gesendet werden, wobei die eindeutige Kennung zum Binden von Batteriedaten verwendet wird, die von der Fahrzeugkommunikationsvorrichtung (11) aus einem Fahrzeug (30) erlangt werden;
Bestimmen, ob das Fahrzeug (30) das Lesen einer Fahrzeugidentifikationsnummer anhand der Zielfahrzeugtypinformationen unterstützt;
Erzeugen der ersten eindeutigen Kennung anhand der Fahrzeugidentifikationsnummer und der Zielfahrzeugtypinformationen, falls das Fahrzeug (30) das Lesen der Fahrzeugidentifikationsnummer unterstützt;
Senden der ersten eindeutigen Kennung an die Fahrzeugkommunikationsvorrichtung (11);
**gekennzeichnet durch**:
Erzeugen der zweiten eindeutigen Kennung anhand der Fahrzeugkommunikationsvorrichtungs-Identifikation, der Benutzeridentifikation und der Zielfahrzeugtypinformationen, falls das Fahrzeug (30) das Lesen der Fahrzeugidentifikationsnummer nicht unterstützt; und
Senden der zweiten eindeutigen Kennung an die Fahrzeugkommunikationsvorrichtung (11);
wobei, falls das Fahrzeug (30) das Lesen der Fahrzeugidentifikationsnummer nicht unterstützt, Zugreifen auf ein Zielkonto des Benutzerendgeräts (20);
Bestimmen, ob die Fahrzeugtypinformationen bezüglich der Fahrzeugtypdatei unter dem Zielkonto mit den Zielfahrzeugtypinformationen übereinstimmen;
im Falle einer Übereinstimmung, Auswählen einer eindeutigen Kennung der Fahrzeugtypdatei, die an die Fahrzeugkommunikationsvorrichtung (11) gesendet werden soll; und
im Falle einer Nichtübereinstimmung, Erzeugen der zweiten eindeutigen Kennung anhand der Fahrzeugkommunikationsvorrichtungs-Identifikation, der Benutzeridentifikation und der Zielfahrzeugtypinformationen.

6. Verfahren nach Anspruch 5, **dadurch gekennzeichnet, dass** es ferner umfasst:
falls das Fahrzeug (30) das Lesen der Fahrzeugidentifikationsnummer unterstützt, Suchen einer Leseanweisung, die den Zielfahrzeugtypinformationen entspricht, in einer voreingestellten Fahrzeugtypdatenbank;
Senden der Leseanweisung an die Fahrzeugkommunikationsvorrichtung (11), um die Fahrzeugkommunikationsvorrichtung (11) zu veranlassen, eine Fahrzeugidentifikationsnummer zurückzugeben, die die Fahrzeugkommunikationsvorrichtung aus dem Fahrzeug (30) anhand der Leseanweisung gelesen hat.

7. Batteriedatenverwaltungsverfahren für ein Fahrzeug (30), angewendet auf eine Fahrzeugkommunikationsvorrichtung (11) zum Erlangen von Batteriedaten des Fahrzeugs (30), wobei das Verfahren umfasst:
Senden einer Anforderung zur Erlangung einer eindeutigen Kennung an einen Cloud-Server (12), sodass der Cloud-Server (12) eine erste eindeutige Kennung oder eine zweite eindeutige Kennung zum Binden der Batteriedaten erzeugt, wobei die erste eindeutige Kennung durch den Cloud-Server (12) anhand der Fahrzeugidentifikationsnummer und der Zielfahrzeugtypinformationen erzeugt wird, wenn der Cloud-Server (12) bestimmt, dass das Fahrzeug (30) das Lesen der Fahrzeugidentifikationsnummer anhand der von einem Benutzerendgerät (20) gesendeten Zielfahrzeugtypinformationen unterstützt; **dadurch gekennzeichnet, dass**
die zweite eindeutige Kennung durch den Cloud-Server (12) anhand der Fahrzeugkommunikationsvorrichtungs-Kennung, der Benutzeridentifikation und der Zielfahrzeugtypinformationen erzeugt wird, wenn der Cloud-Server (12) bestimmt, dass das Fahrzeug (30) das Lesen der Fahrzeugidentifikationsnummer anhand der von dem Benutzerendgerät (20) gesendeten Zielfahrzeugtypinformationen nicht unterstützt; und
Empfangen einer eindeutigen Kennung, die von dem Cloud-Server (12) gesendet wird;
wobei, falls das Fahrzeug (30) das Lesen der Fahrzeugidentifikationsnummer nicht unterstützt, Zugreifen auf ein Zielkonto des Benutzerendgeräts (20);
Bestimmen, ob die Fahrzeugtypinformationen bezüglich der Fahrzeugtypdatei unter dem Zielkonto mit den Zielfahrzeugtypinformationen übereinstimmen;
im Falle einer Übereinstimmung, Auswählen einer eindeutigen Kennung der Fahrzeugtypdatei, die an die Fahrzeugkommunikationsvorrichtung (11) gesendet werden soll; und
im Falle einer Nichtübereinstimmung, Erzeugen der zweiten eindeutigen Kennung anhand der Fahrzeugkommunikationsvorrichtungs-Identifikation, der Benutzeridentifikation und der Zielfahrzeugtypinformationen.

8. Verfahren nach Anspruch 7, vor dem Senden der Anforderung zur Erlangung einer eindeutigen Kennung an den Cloud-Server (12), **dadurch gekennzeichnet, dass** es ferner umfasst:
Bestimmen eines Steckzustands der Fahrzeugkommunikationsvorrichtung (11) und des Fahrzeugs (30);
falls der Steckzustand ein ungesteckter Zustand ist, Auswählen einer lokalen eindeutigen Kennung als die eindeutige Kennung;
falls der Steckzustand ein gesteckter Zustand ist, Lesen einer zu verifizierenden Identifikationsnummer des Fahrzeugs (30) anhand einer lokalen Konfigurationsdatei;
Bestimmen, ob die zu verifizierende Identifikationsnummer mit einer lokalen Fahrzeugidentifikationsnummer übereinstimmt, anhand der zu verifizierenden Identifikationsnummer und der lokalen Fahrzeugidentifikationsnummer;
im Falle einer Übereinstimmung, Auswählen einer lokalen eindeutigen Kennung als die eindeutige Kennung; und
im Falle einer Nichtübereinstimmung, Senden einer Anforderung zur Erlangung einer eindeutigen Kennung an den Cloud-Server (12).

9. Verfahren nach Anspruch 7 oder 8, **dadurch gekennzeichnet, dass** es ferner umfasst:
Verpacken der eindeutigen Kennung und der Batteriedaten in Batteriedaten pro Rahmen; und
Senden der Batteriedaten pro Rahmen an den Cloud-Server (12).

10. Cloud-Server (800), **dadurch gekennzeichnet, dass** er umfasst:
ein erstes Kommunikationsmodul (801);
mindestens einen ersten Prozessor (802), der elektrisch mit dem ersten Kommunikationsmodul (801) gekoppelt ist; und
einen ersten Speicher (803), der kommunikativ mit dem mindestens einen ersten Prozessor (802) verbunden ist; wobei
der erste Speicher (803) Anweisungen speichert, die durch den mindestens einen ersten Prozessor (802) ausführbar sind, um den mindestens einen ersten Prozessor (802) in die Lage zu versetzen, das Batteriedatenverwaltungsverfahren nach den Ansprüchen 5 oder 6 durchzuführen.

11. Fahrzeugkommunikationsvorrichtung (900), **dadurch gekennzeichnet, dass** sie umfasst:
ein zweites Kommunikationsmodul (901);
mindestens einen zweiten Prozessor (902), der elektrisch mit dem zweiten Kommunikationsmodul (901) gekoppelt ist; und
einen zweiten Speicher (903), der kommunikativ mit dem mindestens einen zweiten Prozessor (902) verbunden ist; wobei
der zweite Speicher (903) Anweisungen speichert, die durch den mindestens einen zweiten Prozessor (902) ausführbar sind, um den mindestens einen zweiten Prozessor (902) in die Lage zu versetzen, das Batteriedatenverwaltungsverfahren nach den Ansprüchen 7 oder 9 durchzuführen.

12. Batteriedatenverwaltungssystem, **dadurch gekennzeichnet, dass** es umfasst:
den Cloud-Server (800) nach Anspruch 10;
die Fahrzeugkommunikationsvorrichtung (900) nach Anspruch 11, wobei die Fahrzeugkommunikationsvorrichtung (900) kommunikativ mit dem Cloud-Server (800) verbunden ist.

## Revendications

1. Procédé de gestion de données de batterie pour un véhicule, appliqué à un système de gestion de données de batterie (10), dans lequel le système de gestion de données de batterie (10) comprend un dispositif de communication de véhicule (11) et un serveur en nuage (12), le dispositif de communication de véhicule (11) est destiné à être connecté en communication avec le véhicule (30) et le serveur en nuage (12), respectivement, et le serveur en nuage est également destiné à être connecté en communication avec le terminal utilisateur (20), le procédé comprenant :
la transmission, par le dispositif de communication de véhicule (11), d'une requête d'acquisition d'identifiant unique au serveur en nuage, dans lequel l'identifiant unique est utilisé pour lier des données de batterie acquises par le dispositif de communication de véhicule (11) à partir du véhicule (30) ;
après réception de la requête d'acquisition d'identifiant unique, l'acquisition, par le serveur en nuage (12), d'informations de type de véhicule cible à partir du terminal utilisateur (20), et la détermination si le véhicule prend en charge la lecture d'un numéro d'identification de véhicule en fonction des informations de type de véhicule cible ;
si le véhicule (30) prend en charge la lecture du numéro d'identification de véhicule, l'acquisition, par le serveur en nuage (12), du numéro d'identification de véhicule via le dispositif de communication de véhicule (11), la génération d'un premier identifiant unique en fonction du numéro d'identification de véhicule et des informations de type de véhicule cible, et la transmission du premier identifiant unique au dispositif de communication de véhicule (11) ; **caractérisé en ce que** :
si le véhicule (30) ne prend pas en charge la lecture du numéro d'identification de véhicule, l'acquisition, par le serveur en nuage (12), d'une identification de dispositif de communication de véhicule à partir du dispositif de communication de véhicule (11) et d'une identification d'utilisateur à partir du terminal utilisateur (20), la génération d'un deuxième identifiant unique en fonction de l'identification de dispositif de communication de véhicule, de l'identification d'utilisateur et des informations de type de véhicule cible, et la transmission du deuxième identifiant unique au dispositif de communication de véhicule (11) ;
dans lequel, si le véhicule (30) ne prend pas en charge la lecture du numéro d'identification de véhicule, le serveur en nuage (12) accède à un compte cible du terminal utilisateur (20), et détermine si les informations de type de véhicule concernant un fichier de type de véhicule sous le compte cible correspondent aux informations de type de véhicule cible ;
en cas de correspondance, le serveur en nuage (12) sélectionne un identifiant unique du fichier de type de véhicule à transmettre au dispositif de communication de véhicule (11) ; et
en cas de non-correspondance, le serveur en nuage (12) génère le deuxième identifiant unique en fonction de l'identification de dispositif de communication de véhicule, de l'identification d'utilisateur et des informations de type de véhicule cible.

2. Procédé selon la revendication 1, **caractérisé en ce que**
si le véhicule (30) prend en charge la lecture du numéro d'identification de véhicule, le serveur en nuage (12) recherche une instruction de lecture correspondant aux informations de type de véhicule cible dans une base de données de types de véhicule préétablie, et transmet l'instruction de lecture au dispositif de communication de véhicule (11) ;
le dispositif de communication de véhicule (11) lit un numéro d'identification de véhicule du véhicule (30) en fonction de l'instruction de lecture, et transmet le numéro d'identification de véhicule au serveur en nuage (12).

3. Procédé selon la revendication 1, **caractérisé en ce que**
le dispositif de communication de véhicule (11) détermine un état de branchement du véhicule (30) avec le dispositif de communication de véhicule (11) avant que le dispositif de communication de véhicule (11) ne transmette une requête d'acquisition d'identifiant unique au serveur en nuage (12) ;
si l'état de branchement est un état branché, alors le dispositif de communication de véhicule (11) lit un numéro d'identification à vérifier du véhicule (30) en fonction d'un fichier de configuration local, et détermine si le numéro d'identification à vérifier correspond à un numéro d'identification de véhicule local, et en cas de correspondance, un identifiant unique local est sélectionné en tant qu'identifiant unique, et en cas de non-correspondance, alors une requête d'acquisition d'identifiant unique est transmise au serveur en nuage (12) ;
lorsque l'état de branchement est un état débranché, le dispositif de communication de véhicule (11) sélectionne un identifiant unique local en tant qu'identifiant unique.

4. Procédé selon l'une quelconque des revendications 1 à 3, **caractérisé en ce qu'**il comprend en outre :
après réception de l'identifiant unique, le conditionnement, par le dispositif de communication de véhicule (11), de l'identifiant unique et des données de batterie en données de batterie par trame, et la transmission des données de batterie par trame au serveur en nuage (12).

5. Procédé de gestion de données de batterie pour un véhicule, appliqué à un serveur en nuage (12), le procédé comprenant :
l'acquisition d'informations de type de véhicule cible transmises par un terminal utilisateur (20) en réponse à une requête d'acquisition d'identifiant unique transmise par un dispositif de communication de véhicule (11), dans lequel l'identifiant unique est utilisé pour lier des données de batterie acquises par le dispositif de communication de véhicule (11) à partir d'un véhicule (30) ;
la détermination si le véhicule (30) prend en charge la lecture d'un numéro d'identification de véhicule en fonction des informations de type de véhicule cible ;
la génération du premier identifiant unique en fonction du numéro d'identification de véhicule et des informations de type de véhicule cible si le véhicule (30) prend en charge la lecture du numéro d'identification de véhicule ;
la transmission du premier identifiant unique au dispositif de communication de véhicule (11) ;
**caractérisé par** :
la génération du deuxième identifiant unique en fonction de l'identification de dispositif de communication de véhicule, de l'identification d'utilisateur et des informations de type de véhicule cible si le véhicule (30) ne prend pas en charge la lecture du numéro d'identification de véhicule ; et
la transmission du deuxième identifiant unique au dispositif de communication de véhicule (11) ;
dans lequel, si le véhicule (30) ne prend pas en charge la lecture du numéro d'identification de véhicule, l'accès à un compte cible du terminal utilisateur (20) ;
la détermination si les informations de type de véhicule concernant le fichier de type de véhicule sous le compte cible correspondent aux informations de type de véhicule cible ;
en cas de correspondance, la sélection d'un identifiant unique du fichier de type de véhicule à transmettre au dispositif de communication de véhicule (11) ; et
en cas de non-correspondance, la génération du deuxième identifiant unique en fonction de l'identification de dispositif de communication de véhicule, de l'identification d'utilisateur et des informations de type de véhicule cible.

6. Procédé selon la revendication 5, **caractérisé en ce qu'**il comprend en outre :
si le véhicule (30) prend en charge la lecture du numéro d'identification de véhicule, la recherche d'une instruction de lecture correspondant aux informations de type de véhicule cible dans une base de données de types de véhicule préétablie ;
la transmission de l'instruction de lecture au dispositif de communication de véhicule (11) pour amener le dispositif de communication de véhicule (11) à renvoyer un numéro d'identification de véhicule que le dispositif de communication de véhicule a lu à partir du véhicule (30) en fonction de l'instruction de lecture.

7. Procédé de gestion de données de batterie pour un véhicule (30), appliqué à un dispositif de communication de véhicule (11) pour acquérir des données de batterie du véhicule (30), le procédé comprenant :
la transmission d'une requête d'acquisition d'identifiant unique à un serveur en nuage (12), de sorte que le serveur en nuage (12) génère un premier identifiant unique ou un deuxième identifiant unique pour lier les données de batterie, dans lequel le premier identifiant unique est généré par le serveur en nuage (12) en fonction du numéro d'identification de véhicule et des informations de type de véhicule cible lorsque le serveur en nuage (12) détermine que le véhicule (30) prend en charge la lecture du numéro d'identification de véhicule en fonction des informations de type de véhicule cible transmises par un terminal utilisateur (20) ; **caractérisé en ce que**
le deuxième identifiant unique est généré par le serveur en nuage (12) en fonction de l'identifiant de dispositif de communication de véhicule, de l'identification d'utilisateur et des informations de type de véhicule cible lorsque le serveur en nuage (12) détermine que le véhicule (30) ne prend pas en charge la lecture du numéro d'identification de véhicule en fonction des informations de type de véhicule cible transmises par le terminal utilisateur (20) ; et
la réception d'un identifiant unique transmis par le serveur en nuage (12) ;
dans lequel, si le véhicule (30) ne prend pas en charge la lecture du numéro d'identification de véhicule, l'accès à un compte cible du terminal utilisateur (20) ;
la détermination si les informations de type de véhicule concernant le fichier de type de véhicule sous le compte cible correspondent aux informations de type de véhicule cible ;
en cas de correspondance, la sélection d'un identifiant unique du fichier de type de véhicule à transmettre au dispositif de communication de véhicule (11) ; et
en cas de non-correspondance, la génération du deuxième identifiant unique en fonction de l'identification de dispositif de communication de véhicule, de l'identification d'utilisateur et des informations de type de véhicule cible.

8. Procédé selon la revendication 7, avant la transmission de la requête d'acquisition d'identifiant unique au serveur en nuage (12), **caractérisé en ce qu'**il comprend en outre :
la détermination d'un état de branchement du dispositif de communication de véhicule (11) et du véhicule (30) ;
si l'état de branchement est un état débranché, la sélection d'un identifiant unique local en tant qu'identifiant unique ;
si l'état de branchement est un état branché, la lecture d'un numéro d'identification à vérifier du véhicule (30) en fonction d'un fichier de configuration local ;
la détermination si le numéro d'identification à vérifier correspond à un numéro d'identification de véhicule local en fonction du numéro d'identification à vérifier et du numéro d'identification de véhicule local ;
en cas de correspondance, la sélection d'un identifiant unique local en tant qu'identifiant unique ; et
en cas de non-correspondance, la transmission d'une requête d'acquisition d'identifiant unique au serveur en nuage (12).

9. Procédé selon la revendication 7 ou 8, **caractérisé en ce qu'**il comprend en outre :
le conditionnement de l'identifiant unique et des données de batterie en données de batterie par trame ; et
la transmission des données de batterie par trame au serveur en nuage (12).

10. Serveur en nuage (800), **caractérisé en ce qu'**il comprend :
un premier module de communication (801) ;
au moins un premier processeur (802) couplé électriquement au premier module de communication (801) ; et
une première mémoire (803) connectée en communication avec l'au moins un premier processeur (802) ; dans lequel
la première mémoire (803) stocke des instructions exécutables par l'au moins un premier processeur (802) pour permettre à l'au moins un premier processeur (802) d'exécuter le procédé de gestion de données de batterie selon les revendications 5 ou 6.

11. Dispositif de communication de véhicule (900), **caractérisé en ce qu'**il comprend :
un deuxième module de communication (901) ;
au moins un deuxième processeur (902) couplé électriquement au deuxième module de communication (901) ; et
une deuxième mémoire (903) connectée en communication avec l'au moins un deuxième processeur (902) ; dans lequel
la deuxième mémoire (903) stocke des instructions exécutables par l'au moins un deuxième processeur (902) pour permettre à l'au moins un deuxième processeur (902) d'exécuter le procédé de gestion de données de batterie selon les revendications 7 ou 9.

12. Système de gestion de données de batterie, **caractérisé en ce qu'**il comprend :
le serveur en nuage (800) selon la revendication 10 ;
le dispositif de communication de véhicule (900) selon la revendication 11, le dispositif de communication de véhicule (900) étant connecté en communication avec le serveur en nuage (800).
